# EUROPÄISCHE PATENTSCHRIFT

(11) **EP 2 807 368 B1**
(45) Veröffentlichungstag und Bekanntmachung des Hinweises auf die Patenterteilung: **19.10.2016**
(21) Anmeldenummer: 13714683.3
(22) Anmeldetag: 22.01.2013
(51) Int. Cl.: F02M 63/00, F02M 63/02

(54) **VENTILBLOCK FÜR EINEN HOCHDRUCKSPEICHER EINES COMMON-RAIL SCHWERÖL-EINSPRITZSYSTEMS**
VALVE BLOCK FOR A HIGH-PRESSURE ACCUMULATOR OF A COMMON RAIL HEAVY-FUEL INJECTION SYSTEM
BLOC-VALVES POUR UN ACCUMULATEUR HAUTE PRESSION D'UN SYSTÈME D'INJECTION À RAMPE COMMUNE D'HUILE LOURDE

(30) Priorität: 27.01.2012 AT 1142012
(43) Veröffentlichungstag der Anmeldung: 03.12.2014
(73) Patentinhaber: Robert Bosch GmbH, 70469 Stuttgart-Feuerbach (DE)
(72) Erfinder: SCHNEDT, Johannes, A-5020 Salzburg (AT)
(86) Internationale Anmeldenummer: PCT/IB2013/000226
(87) Internationale Veröffentlichungsnummer: WO 2013/111009

(56) Entgegenhaltungen:
- WO-A1-2012/040756
- WO-A2-2010/040163
- DE-A1-102008 036 819
- US-A1- 2004 261 772

## Beschreibung

Die Erfindung betrifft einen Ventilblock für einen Hochdruckspeicher eines Common-Rail Schweröl-Einspritzsystems für Brennkraftmaschinen mit einem Druckbegrenzungsventil, wobei das Druckbegrenzungsventil mit seiner Hochdruckanschlussseite im Ventilblock aufgenommen ist und der Ventilblock einen Leckagerücklauf aufweist.

Die Erfindung betrifft weiters ein Druckbegrenzungsventil zum Einbau in einen Ventilblock mit einer einen Hochdruckanschluss aufweisenden Hochdruckanschlussseite, die für die Aufnahme in den Ventilblock vorgesehen ist.

Druckbegrenzungsventile dienen der Druckbegrenzung im Hochdruckspeicher (Rail) eines Common-Rail Schweröl-Einspritzsystems bei gleichzeitiger Bereitstellung einer Notfahreigenschaft. Das Druckbegrenzungsventil ist in der Regel in einem Ventilblock am Rail eingeschraubt und steht mit einem federbelasteten Ventilbolzen über einen Dichtsitz mit dem hochverdichteten Kraftstoff in Kontakt. Auf der Rückseite des Dichtsitzes ist das Ventil über eine Leitung mit dem Niederdruckrücklauf des Common-Rail Systems verbunden. Bewegt sich der Raildruck innerhalb des zulässigen Bereichs bleibt das Ventil durch die aufgeprägte Federkraft verschlossen und ist gegenüber dem Rücklauf dicht. Tritt im Fehlerfall eine Überschreitung des maximal zulässigen Raildrucks auf, öffnet das Ventil und begrenzt den Systemdruck. Ein Druckbegrenzungsventil ist beispielsweise in der WO 2004/083695 A1 oder in der EP 1 314 883 A beschrieben.

Aus Kostengründen werden bei sehr großen Dieselmotoren, insbesondere bei Schiffsdieselmotoren, minderqualitative Kraftstoffe wie beispielsweise Schweröl eingesetzt. Aufgrund der besonderen physikalischen Eigenschaften von Schwerölen müssen für den Betrieb besondere Vorkehrungen getroffen werden. Beispielsweise ist die Viskosität von Schweröl wesentlich höher als von normalem Dieselkraftstoff, sodass eine Erwärmung auf mehr als 80°C erforderlich ist, damit das Schweröl überhaupt gepumpt werden kann.

Die hohe Viskosität von Schweröl bedingt, dass auch während des Motorstillstands immer Kraftstoff im Leitungssystem im Kreis gepumpt werden muss, um das Festwerden von Schweröl in den Leitungen zu verhindern.

Zu diesem Zweck ist in Common-Rail Schweröl-Einspritzsystemen ein Spülventil vorgesehen, welches während des Betriebs des Motors geschlossen ist und dabei die hochdruckseitigen Teile des Treibstoffsystems und damit auch das Rail gegenüber einer niederdruckseitigen Treibstoffrückführleitung, durch welche Treibstoff in den Tank rückgeführt werden kann, verschließt. Bei Stillstand des Motors kann nun dieses Spülventil geöffnet werden, sodass Treibstoff von der Hochdruckseite durch die Hochdruckleitungen und das Rail durch das Ventil zur Niederdruckseite und in der Folge in den Tank im Kreis geführt wird, wobei der Treibstoff durch einen Vorwärmer auf einer entsprechenden Temperatur gehalten wird, sodass ein Festwerden des Schweröls in den Leitungen verhindert wird.

Neben der Möglichkeit, eine Kreislaufströmung zur Temperierung des Kraftstoffs im System zu erzeugen, besitzt das Spülventil gleichzeitig auch die Funktion eines Notstoppventils. Durch geeignete Ansteuerung des Spülventils kann im Notfall der Systemdruck sehr schnell abgesenkt werden, ohne dass die Einspritzinjektoren selbst deaktiviert werden müssen.

Bei herkömmlichen Common-Rail Systemen sind das Druckbegrenzungsventil und das Spülventil mit ihrer Hochdruckanschlussseite in einen am Rail angeordneten Ventilblock aufgenommen. Die aus dem Rail abgeführte Kraftstoffmenge wird in der Regel über eine an der der Hochdruckanschlussseite gegenüberliegenden Seite des Druckbegrenzungsventils angeordnete Ablaufleitung in den Kraftstoffrücklauf abgeführt. Dies führt dazu, dass das Druckbegrenzungsventil und die ggf. vorgesehenen weiteren Ventile jeweils über eine eigene Rücklaufleitung verfügen müssen, was hinsichtlich der Verrohrung einen konstruktiven Aufwand bedeutet und hinsichtlich der Montage und der Handhabung nachteilig ist.

Die vorliegende Erfindung zielt daher darauf ab, die erwähnten Nachteile zu vermeiden.

Zur Lösung dieser Aufgabe ist das Ventil der eingangs genannten Art erfindungsgemäß dahingehend weitergebildet, dass ein Niederdruckanschluss des Druckbegrenzungsventils an den Ventilblock angeschlossen und mit dem Leckagerücklauf verbunden ist. Auf diese Art und Weise gelingt es, den Leckagerücklauf des Ventilblocks mitzuverwenden, um die Absteuermenge des Druckbegrenzungsventils abzuführen. Damit ist eine eigene Verrohrung für das Druckbegrenzungsventil auf der Niederdruckseite unnötig, was neben der Verringerung des konstruktiven Aufwands auch Vorteile in der Applikation und in der Handhabung mit sich bringt.

Um ein Mitverwenden des Leckagerücklaufs des Ventilblocks in konstruktiv einfacher Weise zu ermöglichen, sieht eine bevorzugte Weiterbildung vor, dass der Niederdruckanschluss an der Hochdruckanschlussseite des Druckbegrenzungsventils in den Ventilblock mündet, also auf der Seite, mit welcher das Druckbegrenzungsventil im Ventilblock aufgenommen ist.

Die Erfindung ermöglicht es, dass sich eine Mehrzahl von Ventilen, die in einem Ventilblock eines Hochdruckspeichers aufgenommen sind, niederdruckseitig eine gemeinsame Rücklaufleitung teilen. Das Zusammenführen der einzelnen niederdruckseitigen Abläufe erfolgt hierbei bevorzugt im Ventilblock, sodass an den Ventilblock tatsächlich lediglich eine einzige Rücklaufleitung angeschlossen werden muss. Erfindungsgemäss ist hierbei vorgesehen, dass der Ventilblock mit wenigstens einem weiteren Ventil, nämlich einem Spülventil, ausgestattet ist, das mit seiner Hochdruckanschlussseite im Ventilblock aufgenommen ist.

Die der Erfindung zugrunde liegende Aufgabe wird erfindungsgemäß weiters durch ein Druckbegrenzungsventil gelöst, das sich zum Einbau in einen Ventilblock eignet und das eine einen Hochdruckanschluss aufweisenden Hochdruckanschlussseite aufweist, die für die Aufnahme in den Ventilblock vorgesehen ist, wobei ein Niederdruckablauf des Druckbegrenzungsventils an der Hochdruckanschlussseite mündet.

Die Erfindung wird nachfolgend anhand eines in der Zeichnung schematisch dargestellten Ausführungsbeispieles näher erläutert. In dieser zeigt Fig.1 ein Common-Rail Schweröl-Einspritzsystem, Fig.2 eine schematische Ansicht eines Ventilblocks mit einem Druckbegrenzungsventil nach dem Stand der Technik, Fig. 3 eine schematische Ansicht eines Ventilblocks mit einem Druckbegrenzungsventil gemäß der Erfindung und Fig. 4 eine schematische Ansicht eines erfindungsgemäßen Ventilblocks mit einem Druckbegrenzungsventil und einem Spülventil.

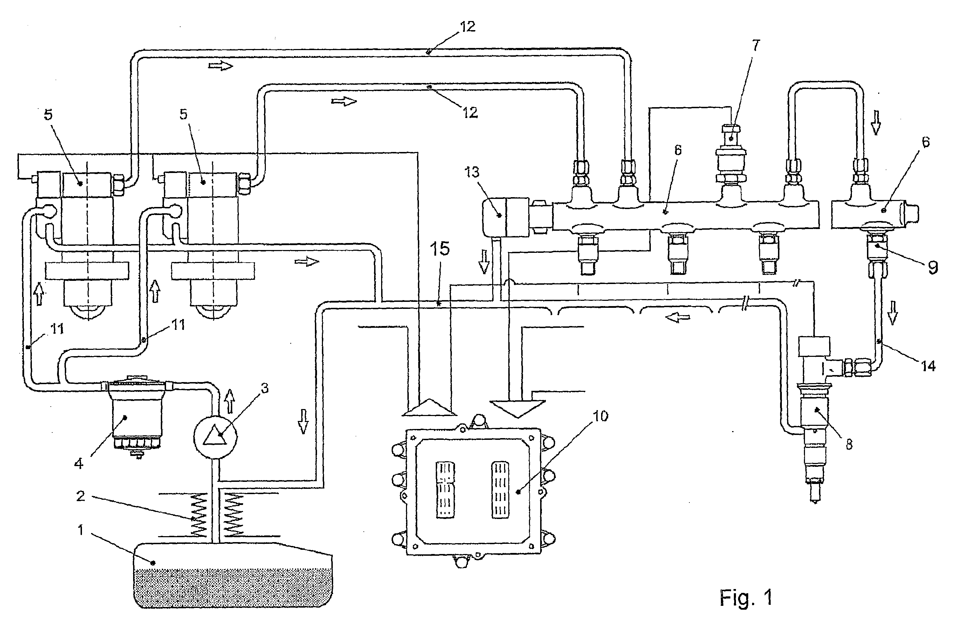

In Fig. 1 ist ein Common-Rail Schweröl-Einspritzsystem schematisch dargestellt. Vom Tank 1 wird von einer Vorförderpumpe 3 Kraftstoff, der im Vorwärmer 2 erwärmt wurde, über einen Kraftstofffilter 4 und Kraftstoffleitungen 11 zumindest einer Hochdruckpumpe 5 zugeführt, in welcher der Kraftstoff auf Systemdrücke von höher als 1400 bar verdichtet wird. Der verdichtete Kraftstoff gelangt über Hochdruckleitungen 12 in zumindest ein Rail 6, das unter anderem mit zumindest einem Ventilblock 13 und einem Raildrucksensor 7 ausgestattet ist. Der Ventilblock 13 umfasst ein Druckbegrenzungsventil und ein Spülventil. Der Druck im Rail 6 wird durch Regelung der von der Hochdruckpumpe 5 in die Hochdruckleitung 12 geförderten Kraftstoffmenge durch das Steuergerät 10 eingestellt. Vom Rail 6 ausgehend gelangt der Kraftstoff über einen Durchflussbegrenzer 9 über die Hochdruckleitung 14 in den Einspritzinjektor 8, der ebenfalls vom Steuergerät 10 angesteuert wird. Die zur Funktion des Einspritzinjektors 8 erforderliche Kraftstoffsteuermenge gelangt über die Niederdruck-Rücklaufleitung 15 wieder zurück in den Tank 1. Um auch während des Stillstands des Motors eine Zirkulation des Kraftstoffs im Leitungssystem gewährleisten zu können, führt vom Ventilblock 13 eine Niederdruck-Rücklaufleitung 15 zum Tank 1, sodass eine Teilmenge des Kraftstoffs direkt in den Tank 1 abgesteuert werden kann.

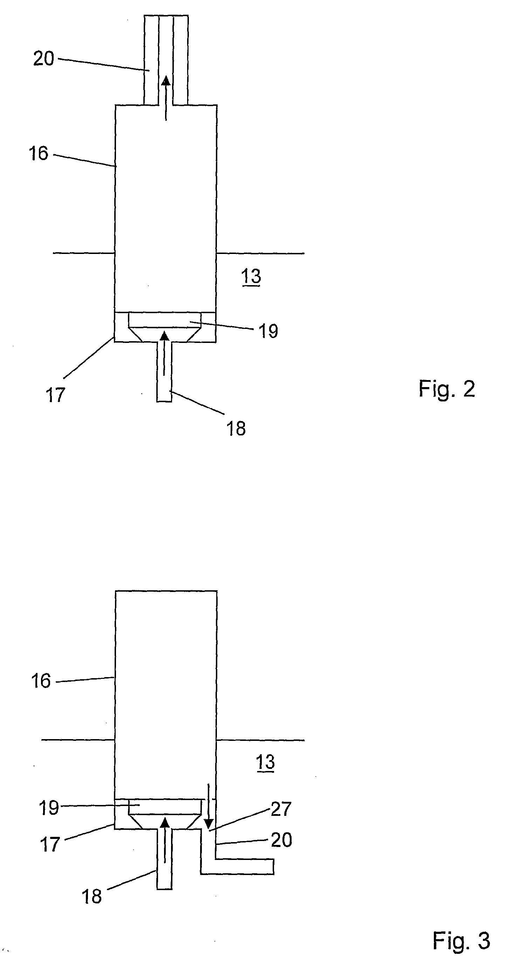

In Fig. 2 ist der Ventilblock schematisch mit 13 angedeutet, in dem ein Druckbegrenzungsventil 16 mit seiner Hochdruckanschlussseite 17 aufgenommen ist. Der Hochdruckzulauf 18 des Druckbegrenzungsventils 16 ist durch ein in Schließrichtung federbelastetes Ventilschließglied 19 verschlossen. Am Ventilschließglied 19 steht der Druck des Hochdruckspeichers über den Hochdruckzulauf 18 an. Bei Überschreiten eines definierten Druckniveaus im Hochdruckspeicher wird das Ventilschließglied 19 entgegen der Federkraft nach innen verschoben, sodass Kraftstoff aus dem Hochdruckspeicher entweichen kann. Die abgesteuerte Kraftstoffmenge verlässt das Druckbegrenzungsventil 16 über den Niederdruckablauf 20 und wird über eine Verrohrung in die Niederdruck-Rücklaufleitung 15 (Fig. 1) des Common-Rail Einspritzsystems geführt. Bei der in Fig. 2 dargestellten Ausbildung nach dem Stand der Technik ist der Niederdruckablauf 20 an der der Hochdruckanschlussseite 17 gegenüberliegenden Seite des Druckbegrenzungsventils 16 angeordnet.

In Fig. 3 ist die erfindungsgemäße Ausbildung dargestellt, bei welcher der Niederdruckablauf 20 nun im Gegensatz zur Ausbildung gemäß Fig. 2 an der Hochdruckanschlussseite 17, d.h. an dem in den Ventilblock 13 eintauchenden Bereich des Druckbegrenzungsventils 16 nach außen geführt ist, sodass die Absteuermenge direkt über die Hochdruckanschlussseite 17 abgeführt werden kann. Dies ermöglicht es, einen nicht dargestellten Leckagerücklauf des Ventilblocks 13 für die Abführung der durch das Druckbegrenzungsventil 16 abgesteuerten Kraftstoffmenge mitzuverwenden, sodass das Druckbegrenzungsventil 16 keinen eigenen Anschluss für eine Rückführungsleitung benötigt.

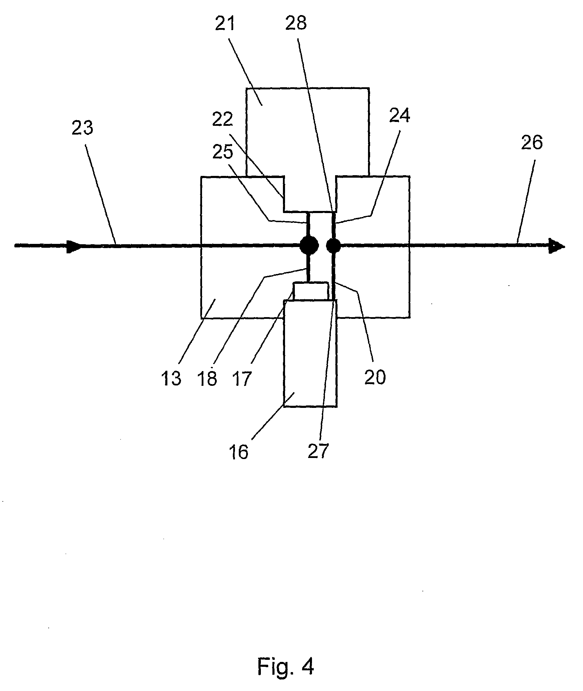

In Fig. 4 ist der Ventilblock 13 nun vollständig gezeigt, in den das Druckbegrenzungsventil 16 und ein Spülventil 21 hochdruckanschlussseitig aufgenommen bzw. eingeschraubt sind. Vom Hochdruck-Speichersystem, insbesondere dem Hochdruckspeicher führt eine Leitung bzw. Bohrung 23 zum Ventilblock 13. Im Ventilblock 13 wird der Kraftstoff über einen als Bohrung ausgeführten Hochdruckzulauf 18 zu einem an der Hochdruckanschlussseite 17 angeordneten Hochdruckanschluss des Druckbegrenzungsventils 16 geleitet. Weiters wird der Kraftstoff im Ventilblock 13 über einen als Bohrung ausgeführten Hochdruckzulauf 25 zu einem an der Hochdruckanschlussseite 22 angeordneten Hochdruckanschluss des Spülventils 21 geleitet. Die abgesteuerten Niederdruckkraftstoffmengen des Spülventils 21 und des Druckbegrenzungsventils 16 werden zurück über an der Hochdruckanschlussseite 17 bzw. 22 angeordnete Niederdruckanschlüsse 27 bzw. 28 in den jeweiligen, im Ventilblock 13 angeordneten Niederdruckablauf 20 bzw. 24 geleitet, wo sie miteinander verbunden werden und über einen separaten Niederdruckanschluss des Ventilblocks 13 und einen Leckagerücklauf 26 abgeführt werden. Der Niederdruckablauf 20 und der Niederdruckablauf 24 sind als im Ventilblock 13 verlaufende Bohrungen ausgebildet.

## Patentansprüche

1. Ventilblock (13) für einen Hochdruckspeicher eines Common-Rail Schweröl-Einspritzsystems für Brennkraftmaschinen mit einem Druckbegrenzungsventil (16), wobei das Druckbegrenzungsventil (16) mit seiner Hochdruckanschlussseite im Ventilblock aufgenommen ist und der Ventilblock einen Leckagerücklauf aufweist, wobei ein Niederdruckanschluss (27) des Druckbegrenzungsventils (16) an den Ventilblock (13) angeschlossen und mit dem Leckagerücklauf (15) verbunden ist, **dadurch gekennzeichnet, dass** der Ventilblock (13) mit wenigstens einem weiteren Ventil, nämlich einem Spülventil (21), ausgestattet ist, das mit seiner Hochdruckanschlussseite (22) im Ventilblock (13) aufgenommen ist.

2. Ventilblock nach Anspruch 1, **dadurch gekennzeichnet, dass** der Niederdruckanschluss (27) an der Hochdruckanschlussseite (17) des Druckbegrenzungsventils (16) in den Ventilblock (13) mündet.

3. Druckbegrenzungsventil zum Einbau in einen Ventilblock nach Anspruch 2 mit einer einen Hochdruckanschluss aufweisenden Hochdruckanschlussseite (17), die für die Aufnahme in den Ventilblock (13) vorgesehen ist, **dadurch gekennzeichnet, dass** ein Niederdruckanschluss (27) des Druckbegrenzungsventils (16) an der Hochdruckanschlussseite (17) mündet.

## Claims

1. Valve block (13) for a high-pressure accumulator of a common-rail heavy-fuel injection system for internal combustion engines, having a pressure-limiting valve (16), wherein the pressure-limiting valve (16) is received with its high-pressure port side in the valve block and the valve block has a leakage return line, wherein a low-pressure port (27) of the pressure-limiting valve (16) is connected to the valve block (13) and is connected to the leakage return line (15), **characterized in that** the valve block (13) is equipped with at least one further valve, specifically a purge valve (21), which is received with its high-pressure port side (22) in the valve block (13).

2. Valve block according to Claim 1, **characterized in that** the low-pressure port (27) opens into the valve block (13) at the high-pressure port side (17) of the pressure-limiting valve (16).

3. Pressure-limiting valve for installation into a valve block according to Claim 2, having a high-pressure port side (17) which has a high-pressure port and which is provided for being received in the valve block (13), **characterized in that** a low-pressure port (27) of the pressure-limiting valve (16) opens out at the high-pressure port side (17).

## Revendications

1. Bloc-soupape (13) pour un accumulateur haute pression d'un système d'injection à rampe commune d'huile lourde pour moteurs à combustion interne comprenant une soupape de limitation de pression (16), la soupape de limitation de pression (16) étant reçue dans le bloc-soupape par son côté de raccord haute pression et le bloc-soupape présentant un retour de fuite, un raccord basse pression (27) de la soupape de limitation de pression (16) étant raccordé au bloc-soupape (13) et étant connecté au retour de fuite (15), **caractérisé en ce que** le bloc-soupape (13) est muni d'au moins une soupape supplémentaire, à savoir une soupape de chasse (21) qui est reçue par son côté de raccord haute pression (22) dans le bloc-soupape (13).

2. Bloc-soupape selon la revendication 1, **caractérisé en ce que** le raccord basse pression (27) débouche au niveau du raccord haute pression (17) de la soupape de limitation de pression (16) dans le bloc-soupape (13).

3. Soupape de limitation de pression destinée à être intégrée dans un bloc-soupape selon la revendication 2, comprenant un côté de raccord haute pression (17) présentant un raccord haute pression qui est prévu pour être reçu dans le bloc-soupape (13), **caractérisée en ce qu'**un raccord basse pression (27) de la soupape de limitation de pression (16) débouche au niveau du côté du raccord haute pression (17).
